# EUROPEAN PATENT SPECIFICATION

(11) **EP 1 835 698 B1**
(45) Date of publication and mention of the grant of the patent: **22.08.2018**
(21) Application number: 06005422.8
(22) Date of filing: 16.03.2006
(51) Int. Cl.: H04L 29/08

(54) **Communications system**
Kommunikationssystem
Système de communications

(43) Date of publication of application: 19.09.2007
(73) Proprietor: Telefónica Germany GmbH & Co. OHG, 80992 München (DE)
(72) Inventor: Görner, Dr. Caio, 81539 München (DE); Marsden, Roger, 81737 München (DE)
(74) Representative: Herrmann, Uwe

(56) References cited:
- EP-A- 1 139 681
- WO-A-01/13662
- WO-A-03/045100
- US-A- 5 568 153

## Description

The present invention refers to a communications system comprising one or more communication nodes and one or more mobile terminal devices, allowing users to communicate with the communications system by data transmission during a data session, which communication nodes and mobile terminals are adapted to communicate with each other via an air interface by sending data from the terminal devices to the communication nodes and/or from the communication nodes to the terminal devices.

Operators providing service over an air interface medium (e. g. the network), e. g. GSM, UMTS, WLAN may provide service or billing differentiation to their end users based upon location. Nodes propagate a radiation footprint and provide a network interface to that geographical area. The end user is aware of the location ("zone"), either through a distinct indication (visual or audible) and/or through differentiation in the billing and/or through differentiation in service experience, e. g. higher throughput, privileged service capabilities, etc.

It is known to provide such location differentiation for voice calls allowing the user to use his mobile terminal at a lower tariff inside his zone than being located outside his zone.

In case of data sessions such as packet data sessions it is to be noted that these sessions can enjoy very long durations, e. g. tens of minutes or even hours. Such a session may well be exposed to mobility and experience manifold transitions of the location state, which can be inside or outside of said defined zone.

Frequent re-determination of the end user location state (inside/outside of the zone) by the operator can lead to confusion for the end user, e. g. since the end user terminal device may both send and receive packets of data at irregular and unexpected times. Practically, these cannot be screened by the end user if the frequency of re-determination of the location state by the operator is too high.

Conversely, minimum re-determination of the location state, e. g. once at the start of the session, can lead to end users establishing sessions inside the location and maintaining the state indefinitely if their move elsewhere. This of course can lead to an undesirable tariff being attached to the complete usage.

It is thus the object of the present invention to improve a communications system as mentioned above which eliminates these subjectivities.

This problem is solved by a communications system according to claim 1. In accordance with the present invention at least one zone is defined for the users of the communications system in which the user may be provided with other, further or modified services and / or tariffs as outside of the defined zone, wherein the communications system further comprises determining means for determining the actual location state. The actual location state may have the values "inside zone" or "outside zone" based on the examination whether the user is located inside or outside of a zone performed by the determining means.

The communications system is further adapted to re-determine the location state by the determining means or to provide the result of such re-determination to another unit of the system based on one or both of the parameters elapsed time and activity during the data session.

The elapsed time may be an elapsed time of the complete data session or the elapsed time since the previous re-determination of the actual location state or the previous transmittal of the actual location state from the determining means to another unit of the system. For example the elapsed time are x minutes after inception of the data session, x minutes after the previous re-determination or x minutes after the previous transmittal of the actual location state from the determining means, wherein "x" may have any value.

It is conceivable to re-assess the location state or to transmit the location state once at the elapsed time of the complete data session or more than once, for example periodically (e.g. each x minutes) during a data session.

The elapsed time may further be the elapsed time since the start of the current data usage, i.e. of the current activity. The term "usage" or "activity" designates the transmittal of data, in case of a packet data session the transmittal of one or more data packets. Also in this case it is conceivable to re-assess or to re-transmit the location state once at the inception of the usage or periodically during the time of usage.

Regarding the re-assessment of the location state it is possible that the determining means is triggered so as to perform the re-determination of the actual location state, i.e. only performs said re-determination upon request of an other unit of the system. It is also conceivable that the determining means performs the re-determination on its own, i.e. without being triggered by another unit and that based on one or both of the parameters elapsed time and activity during the data session the determining means is queried by another unit of the systems to provide the actual location state.

Within the context of this invention the term "actual location state" defines the state describing the actual location of the user's terminal device, i.e. whether or not the terminal device is actually within or outside of a zone at the time of determination.

In a preferred embodiment of the present invention, re-determination of the actual location state or providing the actual location state is triggered independently of the actual location and/or movement of the user. In other words, according to this embodiment of the invention the actual location or the physical movement from inside to outside a zone or vice-versa are not events which trigger the re-determination or the provision of the actual location by the determining means.

Thus, in a preferred embodiment of the invention, the re-assessment of the location state of the user is not triggered by mobility, rather by the elapsed time and / or activity of the data session. Preferably the re-assessment is triggered dependently of both parameters elapsed time and activity, i.e. only if usage is observed and the elapsed time exceeds a threshold, the re-assessment is performed.

The data session is preferably a packet data session which is an air-interface born dialogue exchange between an end user and the network where the end user uses a terminal device to exchange information with one or more nodes, sequentially or simultaneously. A packet data session provides for the transmission of data in the form of packets, switches the data at a packet level and is capable of disassembling and re-assembling the packets. A packet data session is characterized by an initialization of the session, followed by a period until closure which is occupied by periods of inactivity and of transfer of data packets. Activity is here defined by the start of sending or receiving a data packet or a group of associated data packets, e. g. a self-contained file. Typically, it can be generalized for packet data usage that the longer the sessions the higher the ratio of inactivity to transfer will be observed.

Packet data sessions can enjoy very long durations and in accordance the present invention a re-assessment of the location state is triggered based on one or both of the parameters of elapsed time and activity during the data session. Activity may be defined as mentioned above, i. e. by the start of sending or receiving at least one data packet.

In a further embodiment of the present invention the communications system comprises a first database comprising a physical location attribute of all communication nodes resident in the network offered to the end user. A second database shall maintain a definition of each end user pre-defined zones which qualify for location differentiation. These zones may be individually defined for each of the users or may generally apply to all the users of the communications system. It is conceivable that only one zone is defined for a user or that more than one zone is defined.

The aforementioned determining means shall refer to both data bases and compute a result by considering the node from which the end user initiated the packet data session and/or to which the end user is presently camped on. The result is the location state which may have the values "inside zone" or "outside zone".

In a preferred embodiment of the invention the system further comprises a state machine which stores a current location state. Preferably the state machine is connected or connectable to the determining means and obtains from the determining means the actual location state. The current location state may have the same values as the actual location state, i.e. "inside zone" or "outside zone". The current location state which is stored in the state machine need not necessarily be identical to the actual location state which is determined by the determining means. The issue when and whether the current location state is changed to the actual location state is explained below in a further preferred embodiment of the invention. The current location state which is stored in the state machine may be applied for example for billing purposes and/or for the duration of the data session until termination and/or through differentiation in service experience, e.g. higher throughput, privileged service capabilities, etc..

For example, the state machine shall re-synchronize the user location state by means of the determination means for example according to the following criteria:
1. A minimum period elapsed time has been observed since the last state machine localization and
2. a new activity of packet data has begun on the active data session.

The time may be variable according to the type of end user as defined by the operator or to the type of packet data service that is being used by the end user.

In a further embodiment of the present invention the state machine or the determining means or another unit of the system shall maintain one or more historical location states determined in previous determinations by said determining means. In other words the state machine, the determining means or said other unit shall maintain a history of results returned by the determination means for the last requests associated with the current data session.

In accordance to a further embodiment of the present invention the state machine is adapted to change the stored current location state to the actual location state determined by the determining means if the actual location state and a number of the last subsequent historical location states determined by the determining means are identical and of the opposite state than the current state stored in the state machine.

The number of the last subsequent historical information location states is a finite number and may be variable according to the type of the user as defined by the operator or to the type of packet data service that is being used by the end user.

As mentioned before, the current location state which is stored in the state machine shall only change to the actual state determined by the determining means in case that all of said number of the last subsequent historical location states determined by the determining means as well as the actual location state are identical and of the opposite state to the stored current location state of the state machine.

For example, the user may physically move from inside location to outside then back in again, vice-versa and many times during a session, yet due to the historical latency of the state machine the current state may never change. For example in case that said number is set to 2 the end user may move from inside location to outside location, actively send packet data whilst outside location and cause 2 localization determinations, thereafter move back inside location and thus cause an inside location result at the subsequent localization determination. In this case the end user maintains his inside location state, i.e. the current location state, for the whole duration because the last, actual location state has been inside location.

However, in the afore-mentioned example if the user would have stayed outside his zone so that said subsequent localization determination would have resulted to be outside location the current location state of the state machine would have changed from inside to outside location.

It is noted that the location determination may not always be able to absolutely establish the location of the end user. In this case the state machine shall follow a predefined rule to either ignore the ambiguous result of the location determination (i. e. the result is not added to history) or to consider the ambiguous result as either equivalent to inside or outside location state result.

The number of said last subsequent historical location states may depend on the type of user and/or on the type of the data session.

In a further embodiment of the present invention the applicable number of said last subsequent stored historical location states depends on whether the user enters or leaves a defined zone, i. e. whether the user is changing from inside location state to outside, versus changing from outside the location state to inside.

In a further embodiment of the present invention the stored current location state stored in the state machine or in an other unit of the system influences the billing and / or the duration of the data session until termination and/or through differentiation in service experience, e.g. higher throughput, privileges service capabilities, etc.. We refer to this as the billing state / service state which may itself be different to the current location state in certain circumstances.

It is conceivable to maintain the service state and / or the billing state according to an inside location state even if the current location state of the state machine changed to the outside location state and to interrupt the data session immediately or within a certain lapse of time after said change of the current location state.

Such disconnection may be accompanied by a notification to the end user that forced disconnection is about to happen, e.g. prior insertion of information splash page to inform the user accordingly. For example when the determination by the determining means reveals three times in succession that the user is outside the zone and said number of last subsequent stored historical location states is 2 the service state and/or billing state may stay in-zone but the user will be unconditionally disconnected at some predefined time from communication of said splash page for the case the user is browsing with a web browser in the same moment. The trigger for such splash-page may be the change of the current location state to out-zone.

The term "service state" designates a state of the data session defining the availability of certain services to the user. The term "billing state" designates a state of the data session in accordance to which a certain billing is applied to the users activities in the communications system.

The communications system may be adapted so that the billing state and/or service state depends on the location of the user (i.e. inside or outside a zone), at which the data session begins and does not change during the whole session until its termination. For example, if the data session has begun outside the zone it is conceivable to bill the complete data session or provide a service state as if the user remains outside his zone even if the user enters the zone during the data session. If the data session begins inside the zone it is possible to maintain the in-zone billing and service state until the communication is interrupted.

It is also possible to change the billing status of the user if the user enters a zone from outside zone to inside zone. It is conceivable to retroactively apply said inzone billing beginning from that point of time at which last current or the last actual location state has been outside zone.

The afore-mentioned state machine may be adapted to be initialized by inception of a data session. The state machine may be adapted to retrieve from the determination means the actual location state after initialization of the state machine and at future periods which are governed by the elapsed time and/or usage.

In a further embodiment of the present invention the state machine may be adapted so that the user and / or a third party may retrieve information as to the actual or current location state and/or billing state and/or service state upon request. For example at every point in time a customer can request a specific web page URL. This web page is placed on a server which queries the state machine about the actual and/or current location state and/or billing state and/or service state and can display the zone information to the customer. The afore-mentioned determining means may be formed by an Intelligent Network Service Control Point (IN SCP) which is adapted to perform a standard MAP Any Time Interrogation resulting in paging of the terminal device of the user.

As outlined above and in accordance with the present invention localization determination may be queried at time of packet data session inception and at future periods which are governed by both elapsed time and by usage. That is, that periodicity between subsequent localization determination queries / location state determinations may be irregular. The queries / the re-determinations are not triggered by a change of location nor by mobility. That is to say the end user may move from inside location to outside location and back inside again yet whilst outside location never causes a location query due to non packet data activity.

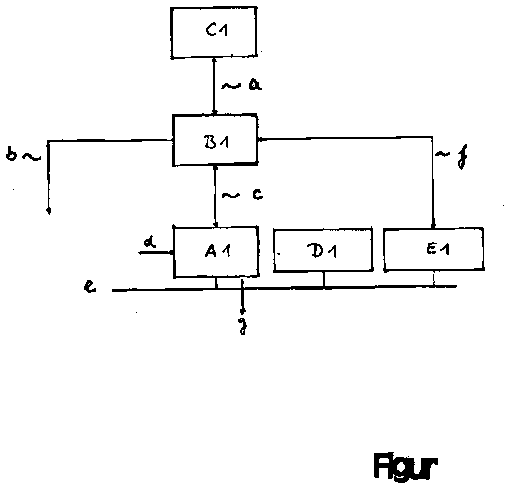

Further advantages and details become evident by the embodiment which is shown in the figure.

In the figure the reference signs and numbers designate the following:
A1: packet sniffer / redirector
B1: unix application with state machine
C1: intelligent network service control point (IN SCP)
D1: HTTP server for information splash page
E1: HTTP server for billing zone presentation
a: XML / HTTP interface to query the actual location state
b: radius disconnect message to GGSN
c: diameter credit control application interface with specific attribute value pair for the billing state
d: radius account messages from GGSN
e: Gi IP network with user traffic
f: SOAP interface to query the billing state
g: enriched partial CDRs with billing state per time slice

In this embodiment the location state of the state machine (B1) is used for location based tarification of the packet data session. The billing state is derived from the current location state.

The solution can be built with data packet analyzer and traffic controller that is similar to the traffic plane function of 3 GPP TS32.125. The system uses radius accounting messages from the GGSN to retrieve the customer's IP address and the MSISDN. Radius accounting start and stop messages are used to establish a user session on the pack sniffer / redirector (A1). During IP traffic flows, the packet sniffer / redirector (A1) is able to assign the IP traffic with the client IP address to a customers MSISDN.

The packet sniffer / redirector (A1) interfaces to the state machine (B1) via a standard diameter interface (a) being enhanced with specific attribute value pairs to inform the packet sniffer / redirector (A1) about the billing state. The state machine (B1) is a special purpose application, which external applications can query the location state which is used in this implementation for tarification purposes.

The radius accounting start message triggers diameter initialization requests which are sent via the diameter interface (c) to the state machine (B1) with the client MSISDN value as session identifier. Upon this initial diameter message, the state machine (B1) queries the IN SCP (C1), which serves as the Localization Application, i.e. the determining means, over a XML/HTTP interface (a) to retrieve the actual location state of the customer. The state machine application (B1) queries the IN SCP (C1) using the MSISDN of the end user.

The IN SCP (C1) performs a standard MAP Any Time Interrogation, resulting in paging of the target end user via MAP provider subscriber information. The result of the MAP any time interrogation is either the identification of the node to which the end user is attached / camped on, or an information that the end user cannot be located (e. g. due to no coverage, network failure, or end user device disconnected). The IN SCP (C1) considers the first and the second database, which store a physical location attribute of all communication nodes resident in the network offered to the end user and a definition of each end user pre-defined zones which qualify for location differentiation, respectively. The first and second database are present on the IN SCP (A1). The IN SCP (A1) computes if the physical position of the attached node is coincident with the end user location definition. The IN SCP (A1) reports the result back to the state machine application (B1).

The state machine (B1) sets up a session with the initial state, which uses the MSISDN as key, the retrieved first actual location state (from which the initial current location state is derived, i.e. initial actual and current location states are identical), the sequence number of the state query and the absolute time of the state and elapsed time for the state.

This state corresponds to the billing state which is returned in the diameter response (c) to the traffic sniffer / redirector (A1). The response additionally holds the validity time, as defined on the state machine (B1).

The traffic sniffer / redirector (A1) has the capability to count user IP traffic and report the usage into partial call detail records (CDR) every time a diameter query is done (g). Upon each cycle of a diameter query, a new partial CDR is written, which includes the billing state which is further used in the billing process of charging.

The traffic sniffer / redirector (A1) has the capability to retrigger the state machine (B1) over the diameter interface (c) after the validity time of the state is finished or when other trigger apply internally of the packet sniffer / redirector (A1). The trigger is only sent, when customer activity is identified by the packet sniffer / redirector (A1).

Those interim messages can be diameter credit control requests and they report the time used since the last diameter response was retrieved from the state machine (B1).

Upon receiving interim messages from the state machine (B1), the old billing state is queried. The state machine (B1) decides, if an update of the current location state is necessary. This is the case, when the last current location state is older than an elapsed time which can be controlled from the states absolute time and elapsed time. In this case a new actual location state will be queried on the XML/HTTP interface (a) to the IN SCP (C1). Using the new answer, a new current location state is calculated and the new billing state which is based on the current location state is put into the diameter credit control answer message (c). The state machine (B1) as well holds at least state and the new state in a database.

In this example implementation this procedure can continue until certain trigger conditions occur.
1. A customer may terminate the session which is identified over the radius accounting stop message, which triggers a diameter credit control terminate message to the state machine (B1), which does the standard state calculation. The final state is used on the packet sniffer / redirector (A1) to update the last CDR with the billing state as usual.
2. An improvement is done, when the first (initial) actual location state (to which the initial current location state corresponds) was outside. In this case there is no state change needed over the whole user session. The elapsed time for such state is infinite.
3. When the first actual and current location state is inside, then this state is checked in the described sequence. In case a customer is found to be outside the first time (i.e. the actual location state is outside), then the billing state is still calculated to be in-zone as a latency to change to the out-of-zone state used in billing shall be at least one elapsed time.
4. When in the history twice an outside actual location state is identified without interruption, the current location state changed from inside to outside and the actual billing state stays in-zone (as before the new calculation), but the customer will be disconnected with a previous insertion of information splash page for the case the user is browsing with a web browser in the same moment. This transaction of the current location state triggers with a certain delay a radius disconnect message to the GGSN. The diameter answer which is enriched with additional outside statues of the customer, is sent to the packet sniffer / redirector (A1), which is triggered to do a redirection to a web server (D1), that holds the information splash page.

At every point in time, a customer can request a specific web page URL. The web page is placed on a server (E1), which queries the state machine (B1) about the current and / or actual state and can display the zone information to the customer.

## Claims

1. Communications system comprising one or more communication nodes and one or more mobile terminal devices, allowing users to communicate with the communications system by data transmission during a data session, which communication nodes and mobile terminals are adapted to communicate with each other via an air interface by sending data from the terminal devices to the communication nodes and/or from the communication nodes to the terminal devices, wherein at least one geographical location zone is defined for the users of the communications system in which the user may be provided with other, further or modified services and / or tariffs as outside of the defined zone, the communications system further comprising determining means (C1) for determining the actual location state based on the examination whether the user is located inside or outside of one of said zones,
**characterized in that**
the communications system is adapted to re-determine the actual location state by said determining means (C1) or to obtain the re-determined actual location state from the determining means (C1) dependent on the parameters elapsed time and the transmittal of data during the data session and independent of the movement of the user and wherein the system comprises a state machine (B1) or another storage unit which stores a current location state and which is adapted to obtain from the determining means (C1) the actual location state determined by the determining means (C1), wherein the state machine (B1) or the another storage unit stores one or more historical location states determined in previous determinations by said determining means (C1) and wherein the state machine (B1) is adapted to change the stored current location state to the actual location state determined by said determining means (C1) if the actual location state and a number of the last subsequent historical location states are identical and of the opposite state than the current location state stored in the state machine (B1).

2. Communications system according to claim 1, wherein the elapsed time is the elapsed time of the whole data session or the elapsed time since the previous re-determination of the actual location state or the previous transmittal of the actual location state from the determining means or the elapsed time since the start of the previous data usage.

3. Communications system according to claim 1 or 2, wherein the determining means are triggered to perform said re-determination of the location state independently of the actual location of the user.

4. Communications system according any one of the preceding claims, wherein the communications system comprises a first database comprising a location attribute of all communication nodes resident in the network offered to the user and a second database comprising a definition of each of said defined zones.

5. Communications system according to any one of claims 1 to 4, wherein the number of said last subsequent stored historical location states depends on the type of user defined by the operator of the communications system and/or on the type of data session.

6. Communications system according to claim any one of claims 1 to 5, wherein the number of said last subsequent stored historical location states depends on whether the user enters or leaves a defined zone.

7. Communications system according to any one of claims 1 to 6, wherein the current location state stored in the state machine (B1) influences the billing of the data session or the services available during the data session.

8. Communications system according to claim 7, wherein the system is adapted to maintain a billing state and/or service state according to an inside location state even if the current location state of the state machine changed to the outside location state and to interrupt the data session after said change of the current location state.

9. Communications system according to any one of claims 1 to 8, wherein the state machine (B1) is adapted to be initialized by inception of a data session.

10. Communications system according to claim 9, wherein the state machine (B1) is adapted to retrieve from the determination means (C1) the actual location state after initialization of the state machine (B1) and at future periods which are governed by elapsed time and transmittal of data.

11. Communications system according to any of claims 1 to 10, wherein the state machine (B1) or another storage unit (E1) is adapted so that the user and / or a third party may retrieve information as to the current and/or actual location state and/or service state and/or billing state.

12. Communications system according to any one of the preceding claims wherein the determination means is formed by an Intelligent Network Service Control Point which is adapted to perform a standard MAP resulting in paging of the terminal device of the user.

## Patentansprüche

1. Kommunikationssystem aufweisend einen oder mehr Kommunikationsknoten und ein oder mehr mobile Endgeräte, die es Nutzern ermöglichen, mit dem Kommunikationssystem vermittels Datenübertragung während einer Datensitzung zu kommunizieren, welche Kommunikationsknoten und mobilen Endgeräte eingerichtet sind, über eine Luftschnittstelle miteinander durch Senden von Daten von den Endgeräten an die Kommunikationsknoten und/oder von den Kommunkationsknoten an die Endgeräte miteinander zu kommunizieren, wobei zumindest ein geographischer Aufenthaltsbereich für die Nutzer des Kommunikationssytems definiert wird, in welchem dem Nutzer andere, weitere oder modifizierte Dienste und/oder Tarife bereitgestellt werden können als außerhalb des definierten Bereichs, das Kommunikationssystem ferner aufweisend Bestimmungsmittel (C1) zum Bestimmen des tatsächlichen Aufenthaltszustands auf Grundlage der Überprüfung, ob sich der Nutzer innerhalb oder außerhalb eines dieser Bereiche aufhält,
**dadurch gekennzeichnet, dass**
das Kommunikationssystem eingerichtet ist, den tatsächlichen Aufenthaltszustand durch besagte Bestimmungsmittel (C1) erneut zu bestimmen oder den erneut bestimmten Aufenthaltszustand von den Bestimmungsmitteln (C1) in Abhängigkeit der Parameter verstrichene Zeit und der Übertragung von Daten während der Datensitzung und unabhängig von der Bewegung des Nutzers aufrecht zu halten, und wobei das System eine Zustandsmaschine (B1) oder eine andere Speichereinheit aufweist, die einen aktuellen Aufenthaltszustand speichert und die eingerichtet ist, den von den Bestimmungsmitteln (C1) bestimmten tatsächlichen Aufenthaltszustand von den Bestimmungsmitteln (C1) zu erhalten, wobei die Zustandsmaschine (B1) oder die andere Speichereinheit einen oder mehr Aufenthaltszustände aus dem Verlauf speichern, die bei vorherigen Bestimmungen von besagten Bestimmungsmitteln (C1) bestimmt wurden, und wobei die Zustandsmaschine (B1) eingerichtet ist, den gespeicherten, aktuellen Aufenthaltszustand in den tatsächlichen Aufenthaltszustand zu verändern, der von den besagten Bestimmungsmitteln (C1) bestimmt wurde, falls der tatsächliche Aufenthaltszustand und eine Anzahl letzter, nachfolgender Aufenthaltszustände aus dem Verlauf gleich und vom entgegengesetzten Zustand als dem aktuellen Aufenthaltszustand sind, der in der Zustandsmaschine (B1) gespeichert ist.

2. Kommunikationssystem nach Anspruch 1, wobei die verstrichene Zeit die verstrichene Zeit der gesamten Datensitzung ist, oder die seit der vorherigen erneuten Bestimmung des tatsächlichen Aufenthaltszustands oder die seit der vorherigen Übertragung des tatsächlichen Aufenthaltszustands von den Bestimmungsmitteln verstrichene Zeit ist, oder die seit dem Beginn der vorherigen Datennutzung verstrichene Zeit ist.

3. Kommunikationssystem nach Anspruch 1 oder 2, wobei die Bestimmungsmittel veranlasst werden, die besagte erneute Bestimmung des Aufenthaltszustands unabhängig vom tatsächlichen Aufenthaltsort des Nutzers zu bestimmen.

4. Kommunikationssystem nach einem der vorstehenden Ansprüche, wobei das Kommunikationssystem eine erste Datenbank umfassend ein Aufenthaltsortsmerkmal aller Kommunikationsknoten, die sich in dem dem Nutzer angebotenen Netzwerk befinden, und eine zweite Datenbank umfassend eine Definition von jedem der besagten definierten Bereiche, aufweist.

5. Kommunikationssystem nach einem der Ansprüche 1 bis 4, wobei die Anzahl dieser letzten, nacheinander gespeicherten Aufenthaltszustände aus dem Verlauf von der Art von Nutzer, die durch den Betreiber des Kommunikationssystems definiert wird, und/oder der Art von Datensitzung abhängt.

6. Kommunikationssystem nach einem der Ansprüche 1 bis 5, wobei die Anzahl dieser letzten, nacheinander gespeicherten Aufenthaltszustände aus dem Verlauf davon abhängt, ob der Nutzer einen definierten Bereich betritt oder verlässt.

7. Kommunikationssystem nach einem der Ansprüche 1 bis 6, wobei der aktuelle, in der Zustandsmaschine (B1) gespeicherte Aufenthaltszustand die Abrechnung der Datensitzung oder die während der Datensitzung verfügbaren Dienste beeinflusst.

8. Kommunikationssystem nach Anspruch 7, wobei das System eingerichtet ist, einen Abrechnungsstatus oder und/oder einen Dienststatus gemäß einem Innen-Aufenthaltszustand aufrechtzuerhalten, selbst wenn sich der aktuelle Aufenthaltszustand der Zustandsmaschine zu dem Außen-Aufenthaltszustand geändert hat, und die Datensitzung nach diesem Wechsel des tatsächlichen Aufenthaltszustands zu unterbrechen.

9. Kommunikationssystem nach einem der Ansprüche 1 bis 8, wobei die Zustandsmaschine (B1) eingerichtet ist, durch den Beginn einer Datensitzung initialisiert zu werden.

10. Kommunikationssystem nach Anspruch 9, wobei die Zustandsmaschine (B1) eingerichtet ist, nach der Initialisierung der Zustandsmaschine (B1) und zu zukünftigen Zeiträumen, die von der verstrichenen Zeit und dem Übertragen von Daten geregelt werden, den tatsächlichen Aufenthaltszustand von den Bestimmungsmitteln (C1) zu beziehen.

11. Kommunikationssystem nach einem der Ansprüche 1 bis 10, wobei die Zustandsmaschine (B1) oder eine andere Speichereinheit (E1) derart eingerichtet ist, dass der Nutzer und/oder ein Dritter Informationen über den aktuellen und/oder tatsächlichen Aufenthaltszustand und/oder Dienstzustand und/oder Abrechnungszustand beziehen kann.

12. Kommunikationssystem nach einem der vorstehenden Ansprüche, wobei das Bestimmungsmittel durch einen Service Control Point eines intelligenten Netzes gebildet ist, der eingerichtet ist, ein Standard MAP durchzuführen, was zu einem Paging des Endgeräts des Nutzers führt.

## Revendications

1. Système de télécommunications, comprenant un ou plusieurs noeuds de communication et un ou plusieurs dispositifs de terminal mobile, permettant aux utilisateurs de communiquer avec le système de communication par une transmission de données durant une session de données, lesquels noeuds de communication et terminaux mobiles sont aptes à communiquer les uns avec les autres via une interface aérienne en envoyant des données des terminaux mobiles aux noeuds de communication et/ou des noeuds de communication aux dispositifs mobiles, dans lequel au moins une zone de localisation géographique est définie pour les utilisateurs du système de télécommunications, où l'utilisateur peut être pourvu en services autres, supplémentaires ou modifiés, et/ou en tarifs comme hors de la zone définie, le système de communication comprenant en outre des moyens de détermination (C1) pour déterminer l'état de localisation réel sur la base de l'examen de si l'utilisateur se trouve oui ou non dans ou hors d'une desdites zones,
**caractérisé en ce que**
le système de communication est apte à déterminer à nouveau l'état de localisation réel par lesdits moyens de détermination (C1), ou à obtenir l'état de localisation réel à nouveau déterminé à partir des moyens de détermination (C1) en fonction des paramètres de temps écoulé et de transmission de données durant la session de données, et indépendamment du déplacement de l'utilisateur, et dans lequel le système comprend une machine à états (B1) ou une autre unité de stockage, laquelle stocke un état de localisation actuel et laquelle est apte à obtenir, à partir des moyens de détermination (C1), l'état de localisation réel déterminé par les moyens de détermination (C1) ; dans lequel la machine à états (B1) ou l'autre unité de stockage stocke un ou plusieurs états de localisation d'historique déterminés lors de déterminations précédentes par lesdits moyens de détermination (C1), et dans lequel la machine à états (B1) est apte à changer l'état de localisation actuel stocké sur l'état de localisation réel déterminé par lesdits moyens de détermination (C1) si l'état de localisation réel et un nombre des derniers états de localisation d'historique subséquents sont identiques ou présentent l'état opposé à celui de l'état de localisation actuel stocké dans la machine à états (B1).

2. Système de communication selon la revendication 1, dans lequel le temps écoulé est le temps écoulé de toute la session de données, ou le temps écoulé depuis la nouvelle détermination précédente de l'état de localisation réel, ou la transmission précédente de l'état de localisation réel à partir des moyens de détermination, ou le temps écoulé depuis le début de l'utilisation de données antérieure.

3. Système de communication selon la revendication 1 ou 2, dans lequel les moyens de détermination sont déclenchés pour réaliser ladite nouvelle détermination de l'état de localisation indépendamment de la localisation réelle de l'utilisateur.

4. Système de communication selon l'une quelconque des revendications précédentes, dans lequel le système de communication comprend une première base de données comprenant un attribut de localisation de tous les noeuds de communication résidant dans le réseau proposé à l'utilisateur et une seconde base de données comprenant une définition de chacune desdites zones définies.

5. Système de communication selon l'une quelconque des revendications 1 à 4, dans lequel le nombre desdits états de localisation d'historique stockés subséquents dépend du type d'utilisateur défini par l'opérateur du système de télécommunications.

6. Système de communication selon l'une quelconque des revendications 1 à 5, dans lequel le nombre desdits états de localisation d'historique stockés subséquents dépend de si l'utilisateur entre ou sort d'une zone définie.

7. Système de communication selon l'une quelconque des revendications 1 à 6, dans lequel l'état de localisation actuel stocké dans la machine à états (B1) influence la facturation de la session de données ou les services disponibles durant la session de données.

8. Système de communication selon la revendication 7, dans lequel le système est apte à maintenir un état de facturation et/ou un état de service conformément à un état de localisation à l'intérieur, même si l'état de localisation actuel de la machine à états est changé sur l'état de localisation à l'extérieur, et à interrompre la session de données après ledit changement de l'état de localisation actuel.

9. Système de communication selon l'une quelconque des revendications 1 à 8, dans lequel la machine à états (B1) est apte à être initialisée par un début d'une session de données.

10. Système de communication selon la revendication 9, dans lequel la machine à états (B1) est apte à récupérer à partir des moyens de détermination (C1) l'état de localisation réel, après initialisation de la machine à états (B1) et, à des périodes futures, lesquelles sont régies par le temps coulé et la transmission de données.

11. Système de communication selon l'une quelconque des revendications 1 à 10, dans lequel la machine à états (B1) ou une autre unité de stockage (E1) est apte pour que l'utilisateur et/ou un parti tiers puisse récupérer des informations concernant l'état de localisation actuel et/ou réel, et/ou un état de service, et/ou un état de facturation.

12. Système de communication selon l'une quelconque des revendications précédentes, dans lequel les moyens de détermination sont formés par un point de commande de services de réseau intelligent (Intelligent Network Service Control Point), lequel est apte à exécuter une MAP standard avec pour résultat une radiomessagerie pour le dispositif terminal de l'utilisateur.
